# EUROPEAN PATENT SPECIFICATION

(11) **EP 0 323 095 B1**
(45) Date of publication and mention of the grant of the patent: **12.10.1994**
(21) Application number: 88311997.6
(22) Date of filing: 19.12.1988
(51) Int. Cl.: B29B 17/00, B09B 3/00

(54) **Method of making molded solid bodies of incinerated waste material**
Verfahren zur Herstellung fester Formkörper aus Verbrennungsabfällen
Procédé de fabrication de pièces solides moulées

(30) Priority: 28.12.1987 JP 334282/87; 22.08.1988 JP 207739/88
(43) Date of publication of application: 05.07.1989
(73) Proprietor: KABUSHIKI KAISHA MIIKE TEKKOSHO, Hiroshima-prefecture (JP)
(72) Inventor: Kobayashi, Yoshikazu, Ashina-gun Hiroshima-prefecture (JP)
(74) Representative: Bowles, Sharon Margaret

(56) References cited:
- DE-A- 2 539 195
- GB-A- 2 171 638
- US-A- 4 328 320
- JAPANESE PATENT GAZETTE, week 8020, section CH, class A, accession no. 80-35581C, Derwent Publications Ltd, London, GB; &JP-A-55 047 333 (FUJI ELECTRIC) 04-04-1980

## Description

The present invention relates to the recovery or recycle of plastics waste material and incinerated waste material provided in ash form from incinerators in a thermal disposal plant. More particularly the invention relates to making a positively reusable molded solid body of incinerated waste material by binding ash-like incinerated waste material with plastic waste material.

It is known that as the style of living and framework of industry are changing in various ways nowadays, common household and industrial waste is increasing in volume and variety.

Some waste is incinerated in thermal disposal plants and this gives rise to large quantities of ash-like waste which may be dumped on the ground, where it will tend to disperse in the wind or in fallen rainwater, or it may be buried, used for land fill work or disposed of at sea. Unfortunately the ash may contain incombustible and hostile materials so that for example toxic waste contained in the ash, and especially heavy metal substances, tends to leach out of the ash and lead to pollution of rivers, lakes, wells and even the sea. Attempts have been made to prevent pollution by binding the ash with cement material, but this has not proved economical and the blocks produced, due to their critical rigidity, have only been suitable for land fill works.

Much plastics waste is also produced, for example in the form of food packages, containers, bottles and so forth. This plastics waste does not break down in normal conditions and creates problems in incinerators, requiring high incineration temperatures which in turn can damage the wall and floors of the incinerator and releasing toxic gases. Plastics waste material is also bulky and so storage or reclamation and handling is also problematical.

There is thus a problem in disposing of large quantities of incinerated waste and waste plastics material and the present invention is directed towards alleviating this problem by providing a molded solid body of incinerated waste material formed by mixing ash-like incinerated waste material with solidifiable molten plastic material and extruding the mixture to form a comparatively dense solid body.

According to the invention there is provided a method of making a molded solid body of incinerated waste material in which ash-like incinerated waste and plastic waste materials are mixed and extruded characterised in that the mixture is ground and compressed to generate heat and subsequently expanded from its compressed state to evaporate water therefrom prior to extrusion to form a comparatively dense solid body.

Preferably the mixture is kneaded, crushed and advanced with a first screw device and ground and compressed by a rotary compressing means.

Patent publication DE A 25 39 195 describes making a molded body from a synthetic thermoplastic material and a filler such as flue ash. In this prior art technique synthetic thermoplastics and a filler are mixed together and heated to form a pasty mass then discharged for molding. However there remains a problem with such a process in that it fails to eliminate excess water and requires a heat source.

The present invention is particularly directed to a process including removal of water from the waste materials.
Figure 1 is a partial cross sectional plan view showing an apparatus employed for a processing method according to the present invention;
Figure 2 is a partial cross sectional front view of the apparatus of Figure 1;
Figure 3 is a cross sectional view taken along the line III-III of Figure 2;
Figure 4 is a front view of a plate having a multiplicity of openings;
Figure 5 is a perspective view showing a molded solid body according to the present invention and
Figures 6 and 7 are views, similar to Figure 1 showing other embodiments.

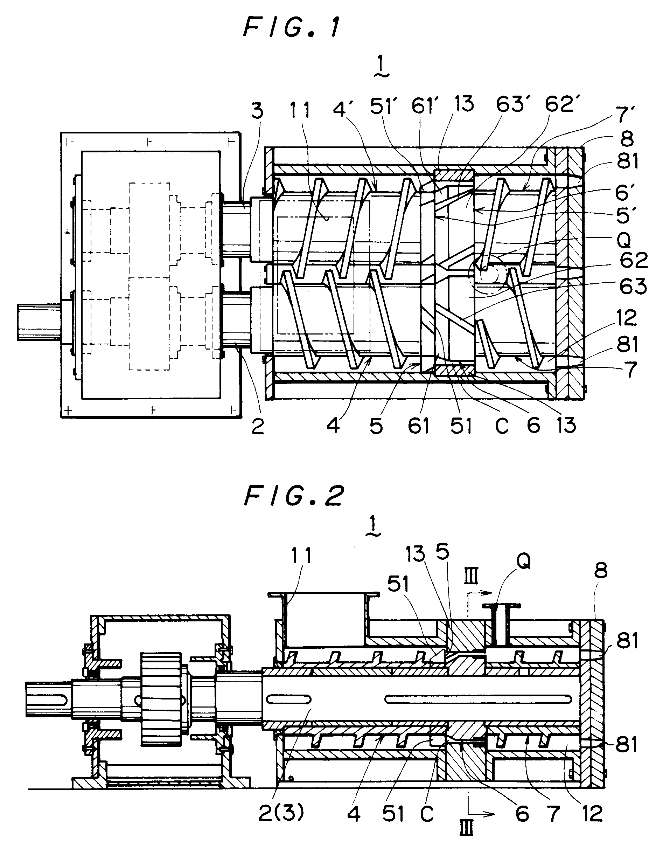

A molded solid body of incinerated waste material according to the present invention is formed by binding ash-like incinerated waste material with solidifiable molten plastic (waste) material and extruding a mixture of the same into a dense solid shape such as a bar. Steps for making the solid body, with reference to the apparatus in Figure 1, comprise kneading, crushing, and advancing operations of a mixture of the incinerated waste material and plastic waste material with a screw device 4 (4′), performing crushing, compressing, and heat generating operations on the mixture with a rotary compressing means 6 (6′) connected to the screw device 4 (4′), evaporating water from the heated mixture by expanding the mixture, i.e. by releasing it from the compressed state, and extruding the mixture through a perforated plate 8. Generally the extruded mixture will be in a bar-like form, but it may be cut to the length desired and have a variety of cross sectional shapes.

The plastic waste material that may be utilised and typically can be recovered at a thermal disposal plant includes thermoset and thermoplastic materials, in particular, for example polyethylene, polypropylene, polyvinyl chloride, polystyrene, etc. The incinerated waste material may be bottom ash provided from the bottom of an incinerator in the plant, fly ash provided from the flues, heat transfer sections, and dust collectors, and other products provided from the incinerators, all of which can be used. The ash-like inicinerated waste material should be contained in a proportion by weight ranging from 10% to 80% (preferably, 20% to 70%) of the total mixture of waste material. If less than 10% ash is used, the efficiency in processing the ash-like waste material is decreased. If over 80% ash is used there may be insufficient plastics to bind the ash and this results in lowered shape retention of the solid body becomes low.

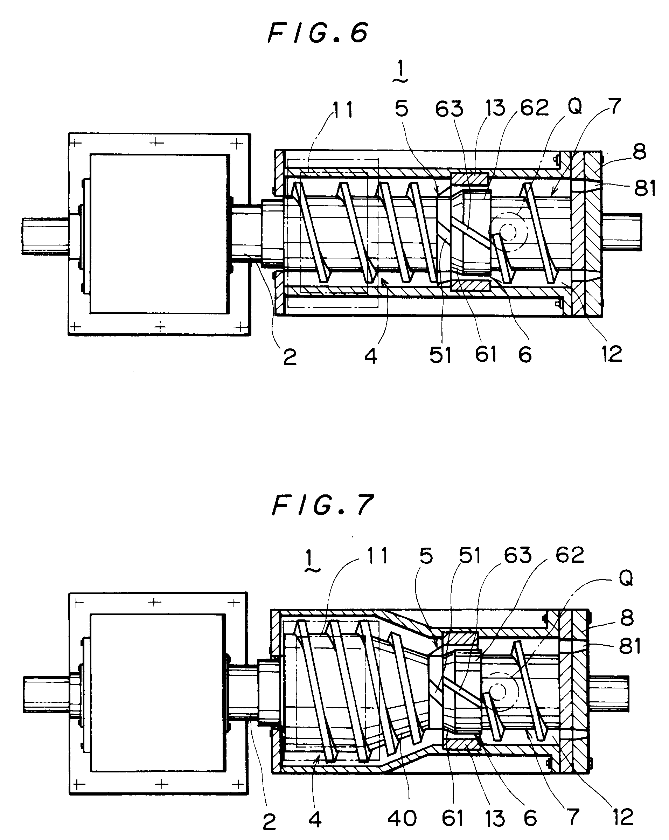

An apparatus for molding a solid body of incinerated waste material (referred to as a molding apparatus hereinafter) according to the present invention may be either a two-shaft screw extruder shown in Figures 1 and 2 or a single-shaft screw extruder shown in Figures 6 and 7.

The molded solid body formed from the ash and plastics waste in accordance with the invention is highly rigid and the particles of waste ash material are trapped within the plastic binder on solidification thereby preventing leaching out of toxic substances. Thus, when disposed in the sea or the ground, the solid body will be prevented from causing pollution or contamination. Additionally, the solid body of incinerated waste material is dense and has a high specific gravity so that it will sink in the water and remain at a particular location. Alternatively it can be used as a structural material for concrete or asphalt construction. The molded solid body according to the present invention, when converted from a bar-like shape to a plate-like form by a rolling mill, can be used as a constructional wall or floor material and also, because of its thermal insulating properties it may be used as a thermal insulating material for air conditioning installations.

A method for processing waste materials into dense solid bodies according to the present invention is now described in more detail. Both the incinerated waste material in ash-form and the plastics waste material are introduced at a ratio in the range previously specified into the screw device 4 (4′). In the screw device 4 (4′), the bulk plastic waste material is chipped and crushed into grains by the rotations of screw blades, mixed with the incinerated waste material in a kneading operation and simultaneously advanced forward. The kneaded mixture of the two waste materials is then fed into the rotary compressing means 6 (6′) where it is further ground and compressed causing the plastic waste material to melt due to frictional heat generation, and at the time any water contained in the mixture becomes heated. When released from the compressed state at the following step, the mixture of now plastically flowable waste material is expanded abruptly. As a result, the solidifiable molten plastic waste material encapsulates the ash-like incinerated waste material while the heated water evaporates due to the pressure drop. The flow of kneaded waste materials, now inlcuding less water, is forcedly discharged through the perforated plate 8 and consequently, the ash-like incinerated waste material is delivered in the form of a bar-like molded solid body 9 encapsulated by the binding action of the solidifiable molten plastic waste material. The bar-like molded solid body 9 is substantially rigid, as described above, and is 1/10 to 1/20 of the original total volume.

Preferred embodiments of the present invention will now be described. Figures 1 to 4 show an extruder similar to the molding apparatus (an apparatus for encapsulating waste material containing high molecular substances) proposed by the same inventor as in this Application and disclosed in foregoing Japanese Patent Application Serial Number 60-147166 (1985).

Throughout the drawings, the numeral 1 represents the complete arrangement of an extruder having at one end a material charge inlet 11 and at the other end, a forward discharge outlet 12. Between the charge inlet 11 and the discharge outlet 12, there are mounted a pair of rotary drive shafts 2 and 3 extending parallel to each other. The rotary drive shafts 2 and 3 have, in the front half, spiral blades mounted on the peripheries thereof to form a pair of first screw devices 4 and 4′ respectively which act as a two-shaft screw device. Rotating in opposite directions to feed from the left to the right of Figure 1, the first screw devices 4 and 4′ intake the charge material and crush plastic portions of the material ito grains which are mingled with ash-like incinerated waste material and a mixture of the waste materials is then advanced forward (to the right as viewed).

The first two-shaft screw devices 4, 4′ are, at their output end, connected to a pair of disk members 5, 5′ respectively which have helical blades 51, 51′ formed thereon and are fixedly mounted on the drive shafts 2, 3 respectively. The disk members 5 and 5′ are adapted to transfer the mixture of waste material from the two-shaft screw devices 4, 4′ into a rotary compressing means 6 and 6′ by pressing. The rotary compressing means 6, 6′ are fixedly mounted on the peripheries of the drive shafts 2, 3 respectively so as to connect with the disk members 5, 5. The rotary compressing means 6, 6′ comprise respectively conical sections 61, 61′ situated at the upstream (inlet) end and cylindrical sections 62, 62′ situated at the downstream (outlet) end. There are a multiplicity of equally spaced helical grooves 63, 63′ formed in the circumferential surfaces of their respective compressing means 6, 6′ and extending from the conical sections 61, 61′ to the cylindrical sections 62, 62′ respectively. Both the rotary compressing means 6 and 6′ are so accommodated in a liner 13 that the clearance c between the liner 13 and the compressing means 6, 6′ is adjustable. The liner 13 has a multiplicity of equally spaced helical grooves 13a and 13a′ formed in the inner wall thereof and extending at angles to the helical grooves 63 and 63′ respectively. The mixture of waste material fed into the clearance c between the liner 13 and the rotary compressing means 6, 6′ is compressed and simultaneously crushed into grains by the grinding action during rotation, thus generating heat due to compression. This causes the plastic waste material to melt and discharge heated water.

The rotary compressing means 6, 6′ are in turn connected to a second pair of two-shaft screw devices 7, 7′ respectively where the compressed state of the mixture is released. On releasing, the heated water evaporates due to immediate pressure drop and will escape in vapor form through an exhaust vent Q disposed above the screw devices 7, 7′. The mixure including less water is then kneaded and compressed by the second two-shaft screw devices 7, 7′ extending coaxially of the first screw devices 4, 4′, and finally the mixture is pressed through a multiplicity of progressively tapering bores 81 in a perforated plate 8. During this stage the incinerated waste material is bound through the binding action of the solidifiable molten plastic material and thus, delivered in the form of a bar-like solid body 9.

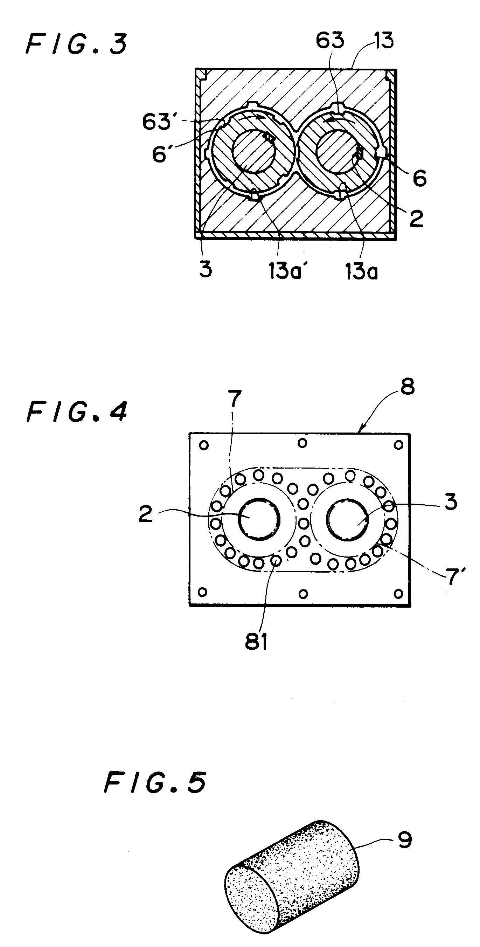

The perforated plate 8 is detachably mounted in the forward discharge outlet 12 and has two groups of bores 81 disposed in rings coaxially with the rotary drive shafts 2 and 3 th. inner edges of the bores 81 aligning with the circumferential peripheries of their respective second two-shaft screw devices 7 and 7′; as shown in Figure 4. The group of the bores 81 may be provided in a polygonal or cross form rather than a circular form illustrated in the embodiment, as the plate 8 is replaceable.

The molded solid body 9 extruded through the bores 81 typically measures about 15 to 40 mm in diameter and about 35 to 60 mm in length, and is dense and rigid enough to use as a structural material for concrete constructions.

Figure 6 shows a single-shaft type apparatus 1 in which a single rotary drive shaft 2 has a spiral blade mounted on the front half periphery thereof so as to form a first single shaft screw device 4. The screw device 4 has at the distal end a rotary member 5 with helical blades 51 and a rotary compressing means 6, both of whch are consecutively mounted in the manner described previously. The rotary compressing means 6 is in turn connected to a second screw device 7 mounted coaxially of the first screw device 4. On the forward end of the second screw device 7, there is provided a discharge outlet 12 in which a perforated plate 8 is disposed. The incinerated waste material and plastic waste material charged from a charge inlet 11 of the apparatus are kneaded and crushed through the movements of the first screw device 4, rotary member 5 with the helical blades, and rotary compressing means 6. Then, the plastic waste material melts down due to the heat generated through compression and friction. Thus, the ash-like incinerated waste material can be bound closely with the solidifiable molten plastic waste material, when they are forced out through the bores 81 of a perforated plate 8 with the second screw device 7, and then, delivered in the form of a bar-like solid body 9.

Figure 7 shows another single-shaft type screw apparatus similar to the one shown in Figure 6, in which the screw device 4 has at the downstream end a forwardly narrowed taper portion 40 thereof. The inner wall of a casing in the apparatus 1 is also shaped in a tapered configuration to correspond to the taper portion 40. Consequently, the material to be processed is, upon reaching the taper portion 40 of the screw device 4, intensively compressed before entering the rotary compressing means 6 as the passing space in the apparatus is gradually reduced. Thereby, the crushing and generation of compressing and frictional heat can be executed more effectively with the compressing means 6.

The components other than the one described above, as shown in Figures 6 and 7, are similar in respect of function to the ones shown in Figures 1 to 4. Hence, as similar components are represented by similar numbers throughout the drawings, the detailed description concerning to Figures 6 and 7 is omitted.

The result of a test in which a bar-like molded solid body of incinerated waste material produced by each of the types of apparatus described has been examined on its compressive strength and applicability to disposal in the water is given below.

### (i) Processed Material:

Equal weights of incinerated waste material having a bulk specific gravity of 0.94, which had been supplied in ash form from an incinerator, and plastic waste material in the form of chips of approximately less than 70 mm square broken off from foamed polystyrene food packages and polythylene kerosine or bottle containers were fed into the above-mentioned apparatus and delivered in the form of a bar-like molded solid body having a diameter of 28 mm. The solid body formed had a specific gravity of 1.8 which corresponded to about 1/13 to 1/18 of the original size of the waste materials (i e. a high rate of volume reduction). It is thus apparent that the ash-like incinerated waster material was closely bound with the molten plastic waste material, and is sufficiently dense to remain at a particular location when disposed in water.

### (ii) Applicability to Disposal in Water:

The molded solid body was immersed in water and kept at an ambient temperature for a period of 21 days. During the immersion, the water showed no sign of turbidity or pollution which resulted from the leaching of metallic substance from the solid body.

### (iii) Measurement of Compressive Strength:

A test piece of the solid bodies measuring 28 mm in diameter and 28 mm in length was examined for compressive strength with the use of a compression test machine. The result was that it broke down when the applied weight was 1.085 kg. This means that the solid body has the compressive strength of about 170 kg/cm² and is thus satisfactory for use as a structural material in concrete and asphalt constructions. Larger diameter bodies (e.g. 70 to 80 mm), can also be used as a common constructional wall or floor material. Additionally, the solid body consisting mainly of ash-like incinerated waste material and plastic waste material provides high thermal insulation properties and may be used as a thermal insulating material for air conditioning installations.

The types of apparatus illustrated in Figures 1 to 4 and 6 and 7 are only shown as embodiments for the present invention, and it will be understood that the apparatus disclosed in the prior Application referred to above may be used with equal success.

The molded solid body of incinerated waste material according to the present invention is formed by closely binding ash-like incinerated waste material with solidifiable molten plastic waste material and extruding a mixture of the same into a bar-like shape, thus having an increased rate of specific gravity, so that it can consistently remain at a particular location without drifting when disposed in the water. Additionally, the ash-like incinerated waste material is encapsulated in the plastic waste binder so that hostile substances contained therein can remain trapped, preventing resultant environmental pollution or contamination. The solid body which is higher in density and rigidity than the component materials due to the binding of the plastics material can be used as a structural material for concrete or asphalt construction. Furthermore, the solid body can be used, particularly when fabricated into a plate-like shape, as a common constructional wall and floor material for a wide range of industrial applications due to its properties of heat resistance and thermal insulation.

The solid body is also formed in such a manner that both the incinerated waste and plastic waste materials are kneaded and compressed simultaneously while the plastic material becomes molten through frictional heat generation. This allows two kinds of waste materials to be efficiently processed together in one procedure. Additionally, this method eliminates the use of a large-scale incinerator (and its attendant problems) for thermal disposal of plastic waste. The solid body produced is 1/10 to 1/20 of the volume of the starting materialse so that it can be handled with ease during transportation and, when recycled for land-fill work, renders the ground rigid and robust. In the instance of disposal in the sea, the solid body will cause no environmental pollution and may even constitute in bulk a fishery sea-bed.

According to the present invention, two kinds of waste materials can be processed at one time and recycled for reuse. This makes it possible to vigorously eliminate the problems on disposal of a variety of waste material which have been of great concern. In view of the fact that the amount of waste material, especially in cities, is extensive and about 15% is ash content while 10% is plastic material, the present invention is of particular public significance.

## Claims

1. A method of making a molded solid body of incinerated waste material in which ash-like incinerated waste and plastic waste materials are mixed and extruded characterised in that the mixture is ground and compressed to generate heat and subsequently expanded from its compressed state to evaporate water therefrom prior to extrusion to form a comparatively dense solid body.

2. A method of making a molded solid body of incinerated waste meraterial as defined in claim 1 in which the mixture is kneaded, crushed and advanced with a first screw device (4,4').

3. A method of making a molded solid body of incinerated waste material as defined in claim 2 in which the mixture is ground and compressed by a rotary compressing means (6,6') connected to said first screw device and is extruded through a perforated plate (8) to form the solid body.

4. A method of making a molded solid body of incinerated waste material as defined in claim 3 wherein the step of extruding the mixture through the perforated plate (8) into the solid body is executed by a second screw device (7,7') arranged coaxially of said first screw device (4,4').

5. A method of making a molded solid body of incinerated waste material as defined in claim 4 wherein both said screw devices comprise a pair of parallel two-shaft screw devices (4,4'; 7,7').

6. A method of making a molded solid body of incinerated waste material as defined in claim 4 wherein both said screw devices are single-shaft screw devices (4,7).

7. A method of making a molded solid body of incinerated waste material according to claim 3 in which the perforated plate has a plurality of tapered perforations of a polygonal or cruciform cross section.

8. A method of making a molded solid body of incinerated waste material according to any preceding claim in which the ash like waste comprises in the range of 10% to 80% by weight of the body.

9. A method according to any preceding claim in which the body is formed into a bar-like shape.

10. A method according to any preceding claim further comprising the step of converting the body to a plate-like form by a rolling mill.

## Patentansprüche

1. Verfahren zur Herstellung eines festen Formkörpers aus verbrannten Abfallstoffen, bei dem aschenartiger verbrannter Abfall und plastische Abfallstoffe gemischt und extrudiert werden, dadurch gekennzeichnet, daß das Gemisch gemahlen und komprimiert wird, um Wärme zu erzeugen, und nachfolgend aus seinem komprimierten Zustand expandiert wird, um Wasser von dem Gemisch zu verdampfen, bevor das Gemisch zur Bildung eines vergleichsweise dichten festen Körpers extrudiert wird.

2. Verfahren zur Herstellung eines festen Formkörpers aus verbrannten Abfallstoffen nach Anspruch 1, bei dem das Gemisch geknetet, zerkleinert und mit einer ersten Schneckenanordnung (4, 4') vorbewegt wird.

3. Verfahren zur Herstellung eines festen Formkörpers aus verbrannten Abfallstoffen nach Anspruch 2, bei dem das Gemisch mittels einer mit der ersten Schnekkenanordnung verbundenen Rotationskompressionsanordnung (6, 6') gemahlen und komprimiert wird und zur Bildung des festen Körpers durch eine perforierte Platte (8) hindurch extrudiert wird.

4. Verfahren zur Herstellung eines festen Formkörpers aus verbrannten Abfallstoffen nach Anspruch 3, bei dem der Verfahrensschritt des Extrudierens des Gemisches durch die perforierte Platte (8) zu dem festen Körper mittels einer zweiten Schneckenanordnung (7, 7') durchgeführt wird, die koaxial zu der ersten Schnekkenanordnung (4, 4') angeordnet ist.

5. Verfahren zur Herstellung eines festen Formkörpers aus verbrannten Abfallstoffen nach Anspruch 4, bei dem beide Schneckenanordnungen ein Paar von parallelen Doppelwellen-Schneckenanordnungen (4, 4'; 7, 7') aufweisen.

6. Verfahren zur Herstellung eines festen Formkörpers aus verbrannten Abfallstoffen nach Anspruch 4, bei dem beide Schneckenanordnungen Einwellen-Schneckenanordnungen (4, 7) sind.

7. Verfahren zur Herstellung eines festen Formkörpers aus verbrannten Abfallstoffen nach Anspruch 3, bei dem die perforierte Platte eine Mehrzahl von konischen Perforationen mit polygonalem oder kreuzförmigem Querschnitt aufweist.

8. Verfahren zur Herstellung eines festen Formkörpers aus verbrannten Abfallstoffen nach einem der vorhergehenden Ansprüche, bei dem der aschenartige Abfall 10 bis 80 Gewichtsprozent des Körpers ausmacht.

9. Verfahren nach einem der vorhergehenden Ansprüche, bei dem der Körper in eine stangenartige Form gebracht wird.

10. Verfahren nach einem der vorhergehenden Ansprüche, bei dem ferner der Körper mittels eines Walzwerkes in eine plattenartige Form gebracht wird.

## Revendications

1. Procédé de fabrication d'un corps solide moulé obtenu à partir d'un matériau constitué par des déchets incinérés dans lequel des matériaux de déchets incinérés cendreux et de déchets plastiques sont mélangés et extrudés, caractérisé en ce que le mélange est broyé et comprimé pour produire de la chaleur puis est ensuite dilaté à partir de son état comprimé pour permettre l'évaporation de l'eau qui y est contenue avant extrusion afin de former un corps solide comparativement dense.

2. Procédé de fabrication d'un corps solide moulé obtenu à partir d'un matériau constitué par des déchets incinérés, selon la revendication 1, dans lequel le mélange est malaxé, broyé et déplacé au moyen d'un premier dispositif à vis (4, 4').

3. Procédé de fabrication d'un corps solide moulé obtenu à partir d'un matériau constitué par des déchets incinérés, selon la revendication 2, dans lequel le mélange est broyé et comprimé par un moyen de compression rotatif (6, 6') relié audit premier dispositif à vis (4, 4') et est extrudé à partir d'une plaque perforée (8) pour constituer un corps solide.

4. Procédé de fabrication d'un corps solide moulé obtenu à partir d'un matériau constitué par des déchets incinérés selon la revendication 3, dans lequel l'étape d'extrusion du mélange à travers la plaque perforée (8) pour donner un corps solide est réalisée par un deuxième disPositif à vis (7, 7') disposé suivant une direction coaxiale par rapport au premier dispositif à vis (4, 4').

5. Procédé de fabrication d'un corps solide moulé obtenu à partir d'un matériau constitué par des déchets incinérés, selon la revendication 4, dans lequel l'un et l'autre des dispositifs à vis comportent une paire de dispositifs à vis à deux arbres parallèles (4, 4' ; 7, 7').

6. Procédé de fabrication d'un corps solide moulé obtenu à partir d'un matériau constitué par des déchets incinérés, selon la revendication 4, dans lequel l'un et l'autre des dispositifs à vis sont des dispositifs à vis à arbre unique (4, 7).

7. Procédé de fabrication d'un corps solide moulé obtenu à partir d'un matériau constitué par des déchets incinérés, selon la revendication 3, dans lequel la plaque perforée comporte une pluralité de perforations effilées de section transversale polygonale ou cruciforme.

8. Procédé de fabrication d'un corps solide moulé obtenu à partir d'un matériau constitué par des déchets incinérés, selon l'une quelconque des revendications précédentes, dans lequel les déchets cendreux interviennent dans la constitution du corps suivant une proportion de l'ordre de 10 à 80% en poids.

9. Procédé selon l'une quelconque des revendications précédentes, dans lequel le corps est formé en barre .

10. Procédé selon l'une quelconque des revendications précédentes, comportant l'étape ultérieure qui consiste à transformer le corps en plaque , par laminage.
